# EUROPEAN PATENT APPLICATION

(11) **EP 4 435 401 A1**
(43) Date of publication of application: **25.09.2024**
(21) Application number: 23210280.6
(22) Date of filing: 16.11.2023
(51) Int. Cl.: G01M 5/00, G01M 7/00, F16B 31/00

(54) **AN INTELLIGENT SYSTEM FOR MONITORING AND ASSESSING THE TECHNICAL CONDITION OF PRESTRESSED BOLTED LAP OR BUTT JOINTS**

(30) Priority: 23.03.2023 PL 44417123
(71) Applicant: Politechnika Slaska, 44-100 Gliwice (PL)
(72) Inventor: Moczulski, Wojciech, 44-160 Rudno (PL); Klimpel, Andrzej, 44-100 Gliwice (PL); Przysta ka, Piotr, 41-711 Ruda l ska (PL)

(57) **Abstract**

An intelligent system for monitoring and assessing the technical condition of prestressed lap or butt screw joints is characterized by the permanent and detachable mounting of an intelligent monitoring head on the monitored lap or butt screw joint (6). This occurs at the end of the screw shank (5), protruding above the joint nut. The measuring GUM (1) or GUT (2) is attached through an adapter (3). The intelligent monitoring and measuring impact head (1) comprises a body (1a), a vibration sensor, and an intelligent electronic system (1b). This system allows the collection of energy necessary to activate the activator (1c) and induce impulse excitation of the impactor (1d). The impactor (1d) is positioned above the front surface of the screw shank (5). The GUT (2) intelligent ultrasonic measurement and monitoring head GUT (2) consists of the body (2a) and an intelligent electronic system (2b) that activates an ultrasonic probe (1c) located above the front surface of the screw shank (5) and immersed in the coupling medium (O). Intelligent heads GUM (1) or GUT (2) are mounted on at least one, preferably on each, monitored screw (5) of the PZ lap joint or PD butt joint (6) of the structure, respectively. One head of a given type is mounted on the shank of one screw. Each head (1) or (2), with an adapter (3) and a locknut (4), is mounted in such a way as to ensure watertightness.

## Description

The invention is an intelligent system to monitor and assessing the technical condition of prestressed lap and/or butt screws used in responsible metal structures, including those made of (U)HSS steel, especially those subjected to fatigue and/or impact loads.

Currently, there are no known methods for noninvasive analysis of the technical condition of screw joints, particularly the decrease in the compression force of the screw joint, cold, brittle, or fatigue cracks, and cracks caused by general and/or stress corrosion of the screw shank and/or screw nut, leading to structural failure. The reliability of prestressed bolted joints, especially high-responsibility structures made of high-strength steel (U)HSS, is estimated using mathematical models and the manufacturer's warranty. This assessment occurs periodically - on average, every few years - depending on the type of screw j oint, class of screws and nuts, pipeline structure or piping of refinery installations, electric power or nuclear energy, and the transported medium. The connection is replaced each time after the expiry date without checking its continued use - durability or degree of wear.

In EP3086095A1, a sensor system is disclosed to monitor a screw connection between a first externally threaded component and a second internally threaded component. The second internally threaded component may be connected to the first component via an external thread. The system includes a magnetic field sensor and magnet. The magnetic field sensor is inserted into the first externally threaded element, while the magnet is integrated into the second internally threaded element. These components are arranged and designed to facilitate the detection of changes in the relative position between the magnet and the magnetic field sensor. Upon detection of such changes, the sensor system determines the manipulated state of the screw connection.

In the Chinese patent description No. CN103335749A, a screw rod type strain sensor designed to measure stress changes is outlined. This strain sensor adopts structures such as screw rod type elastomer, foil gauge, etc. It can be mounted directly in the inner center of the mine hoist brake, providing a direct reflection of tension changes. The noteworthy characteristics of the screw rod type strain sensor include high measurement accuracy, strong anti-jamming ability, convenient installation, simple structure, and broad practicability.
In the paper "A Novel Nonlinear Acoustic Health Monitoring Approach for Detecting Loose Bolts" dated 14/03/2018, Springer Science + Business Media, screw joints are tested with tonal excitation using a harmonic vibration generator.

In the paper `Control of the integrity of bent joints with the second harmonic generated by guided waves' by Yi Yang, Ching-Tai Ng, and Andrei Kotousov, published in Structural Health Monitoring in 2019 (Vol. 18(1), 193-204), the integrity of screw joints is tested by generating 10 signal periods, but the natural frequency of the joint must be known in advance.

In the paper "FBG Smart Bolts and Their Application in Power Grids" by Chao Duan, Hongying Zhang, Zhuoshu Li, Ye Tian, Quan Chai, Jun Yang, Libo Yuan, Jianzhong Zhang, Kai Xie, and Zhongbin Lv, published in IEEE Transactions on Instrumentation And Measurement, Vol. 69(5), May 2020, screws with integrated Bragg grids in power networks are used.

The aim of the invention is to develop an innovative, intelligent system for non-invasive (i.e., without damaging the screw joint) monitoring and assessment in real-time of the technical condition of prestressed lap screw joints - PZ and butt - PD. The goal is to accurately assess the technical condition of these joints, including the decrease in the prestressing force of the screw shank, detection of cold, fatigue, or brittle cracks and cracks caused by general and/or stress corrosion in metal structures, especially pipelines or piping of refinery installations, conventional energy, or nuclear energy. This is achieved through the use of intelligent impact monitoring and measurement heads - GUM and ultrasonic - GUT, mounted on the end of the screw shank of the monitored screw joint.

Moreover, the purpose of the invention is not only the possibility of monitoring the current, periodic or at the request of the user structure and assessment in real-time of the technical condition of screw joints. This is facilitated through a control and monitoring programme running on a remote computer (which can simultaneously act as a server for databases collected from the monitoring and measurement of many heads) and remotely wireless or via a wired connection, starting and carrying out monitoring and/or assessing the technical condition of the screw joint and sending the results to the server and the user.
The aim of the invention is also to develop an intelligent system for monitoring and assessing the technical condition of screw joints in real-time. This system enables vibration measurement, frequency, and statistical analysis of vibrations to determine the signal features carrying information about the current technical condition of the monitored joint. Additionally, the evaluation of the obtained signal features is performed using an intelligent procedure with a set of criteria and artificial intelligence methods.
The intelligent system, according to the invention, is characterized by the fact that an intelligent GUM or GUT monitoring and measuring head is permanently and detachably mounted on the monitored lap or butt screw joint. This head is placed on the end of the screw shank protruding above the joint nut via an adapter. The intelligent monitoring and measuring impact head (1) or intelligent ultrasonic monitoring and measuring head are constructed as follows:
a) Intelligent monitoring and measuring impact head - GUM:
   This is composed of a body, a vibration sensor, and an intelligent electronic system. This system enables the accumulation of energy necessary for the activator (1c) to cause pulse activation of the impactor. The impactor is positioned above the front surface of the screw shank.
b) Intelligent ultrasonic monitoring and measuring head - GUT:
   This is composed of a body and an intelligent electronic system that activates an ultrasonic probe placed on the front surface of the screw shank and immersed in the coupling medium. The GUM and/or GUT intelligent heads are mounted on at least one, preferably on each, monitored screw of the PZ lap joint or PD butt joint of the structure. One head of a given type is on the shank of one screw. Each head, with an adapter and locknut, is mounted in such a way as to ensure watertightness.

The following is used as a vibration sensor in the sensor and the intelligent electronic system: a mechanical vibration sensor, preferably a miniature MEMS accelerometer. The intelligent electronic system is a microprocessor system that enables the processing of the signal measured by a sensor or probe and its analysis to calculate the characteristics of this signal. These characteristics carry information about the technical condition of the screw joint on which the intelligent monitoring head GUM or GUT is mounted. Additionally, it enables the transmission of information about the technical condition of the screw joint to the superior system - UN. The activator of the intelligent GUM monitoring head is an electromechanical trigger system with a return mechanism. The impactor of the intelligent GUM monitoring head is a cylindrical element made of high-hardness steel with high deformation and impact resistance.

The intelligent electronic system of the GUM and GUT intelligent monitoring heads connects bidirectionally via optical fiber and/or wirelessly to an external server. It receives commands initiating a periodic inspection of the screw joint and sends data, including the results of measurements, and preferably information on the technical condition of the monitored screw joint to the parent system. The GUM and GUT intelligent monitoring heads are powered by an electronic system equipped with an integrated circuit with very low power consumption and an energy buffer, preferably a miniature battery or supercapacitor. This setup ensures the functionality of recovery and processing of waste energy obtained from the environment from various sources: electromagnetic radiation, vibration-piezoelectric, photovoltaic-solar, and thermal-thermoelectric generators, thermopiles, and thermocouples. This ensures high energy conversion efficiency.

GUM and GUT intelligent monitoring heads are used to monitor and assess the condition of lap screw joints - PZ or butt joints - PD of metal structures, especially those made of high-strength (U)HSS steel, including particular conditions such as:
- brittle cracks, fatigue cracks, cold cracks (hydrogen cracks), and cracks caused by general and/or stress corrosion,
- stresses: deformations of the screw shank (stress relaxation), longitudinal deformations of the screw shank in the monitored screw connection. Simultaneously, it indirectly assesses the pressure in the pipeline or piping of refinery installations, conventional energy, or nuclear energy, as well as the nature of the medium flow - laminar or turbulent,
- The level of effort and quality of the screw j oint, its degree of wear, and expected durability.

As a sensor within the sensor and the intelligent electronic system, an additional fibre-optic sensor or a fiber-optic sensor is used in/on the inspection optical fiber, preferably in the transmission pipelines and piping of refinery installations, conventional energy, or nuclear energy.

Each of the GUM and GUT intelligent monitoring heads is additionally connected via an intelligent electronic system to an external master system, preferably via a server, which plans tests and interprets logs and warnings generated by individual GUM and GUT intelligent monitoring heads. The master system (UN) is preferably a programmed microcircuit.

Each of the GUM and GUT intelligent monitoring heads automatically (i.e., using the built-in intelligent electronic system (1b) and (2b)) evaluates the measured signal(s) and further sends data - including an assessment of the technical condition of the screw joint - to the server (S). Each of the intelligent GUM and GUT monitoring heads is independently powered.

Intelligent GUM and GUT monitoring heads are mounted on the selected pin of the monitored screw of the PZ and/or PD screw j oint, preferably every other, especially in particularly sensitive structures, such as wind towers, high-pressure transmission pipelines, and piping of refinery installations, conventional energy, or nuclear energy. GUM and GUT heads are mounted on all monitored screw joints.

The intelligent monitoring and measuring head GUM or GUT is mounted alternately on each monitored bolt of a screw joint with a lap joint - PZ or a butt joint - PD. Here, "alternately" means that GUM and then GUT are installed alternately.

The advantages of the solution according to the invention are
- the capability for periodic real-time monitoring and assessment of the technical condition of prestressed bolted joints (e.g., scheduled weekly inspections or on a user-defined random basis),
- noninvasive monitoring of tightness and parameters of flange connections in pipe installations that transport various media,
- The generation of logs, redundancy, and fault tolerance, which stem from the automated evaluation of the measured signal(s) by each head, followed by the transmission of status information. Notably, each head operates independently with its power supply,
- intelligent monitoring-measuring, impact, and ultrasonic heads operate according to a schedule generated based on testing the digital twin of the installation (e.g., once a week). Additionally, they operate at the request of the master system (e.g., in the event of an earthquake, it is necessary to examine whether the installation is suitable for further safe operation).

Moreover, an important advantage of the intelligent system for monitoring and measuring the technical condition of PZ and PD screw joints of metal structures, especially those made of (U)HSS steel according to the invention, is its configuration in at least two possible variants: 1. impact (mechanical impact) and 2. ultrasonic. Hybrid monitoring of the technical condition of screw joints is also possible (e.g., alternately mounted intelligent GUM and GUT monitoring heads on the monitored screw joints of (U)HSS steel structures).

The solution, according to the invention, allows, in the case of prestressed butt screw joints of flanged pipes in transmission pipelines and piping of refinery installations, conventional, or nuclear power plants, to not only test the technical condition of the screw joints but also examine the parameters of these installations, such as
- cracks, stress relaxation,
- longitudinal deformations of the monitored screw shank and, therefore, indirectly, the pressure in the installation with screwed flange connections of pipes, nature of the flow (laminar, turbulent). An intelligent system designed for monitoring and assessing the technical condition of PZ and PD screw joints in metal structures, particularly those made of (U)HSS steel, according to the invention, has various functionalities. It will be especially used for real-time monitoring of bolted flange connections in transmission pipelines and piping of refinery installations, conventional energy, or nuclear energy. This involves assessing the tightness of these connections and the technical condition of each bolted flange pipe connection. Furthermore, the system will be used for active and non-invasive monitoring of parameters important for the operation of transmission pipelines and piping in refinery installations, conventional energy, or nuclear energy facilities. It offers warnings and the capability to check, upon request, the operating parameters of these installations, including the technical condition of the screwed flange connections of the pipes in these installations.

The invention is explained using the following illustrations:

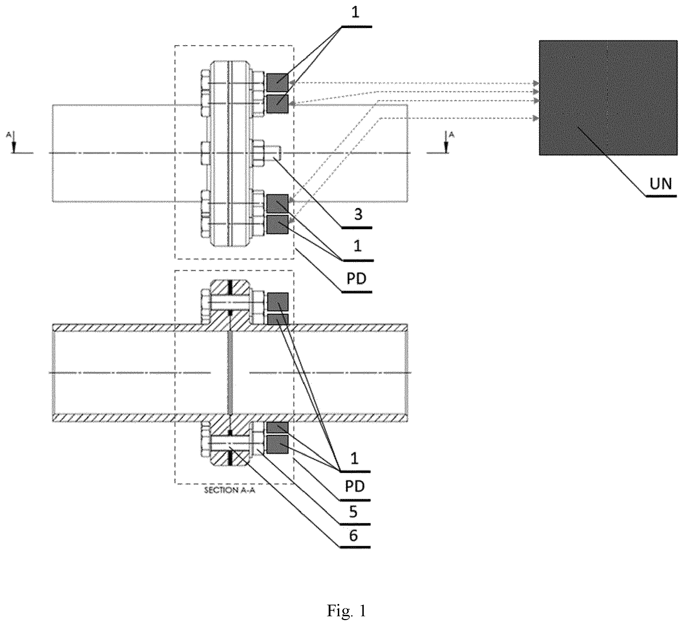

Fig. 1. View of the intelligent system for monitoring and assessing the technical condition of screw joints in a flange connection of a pipe installation,

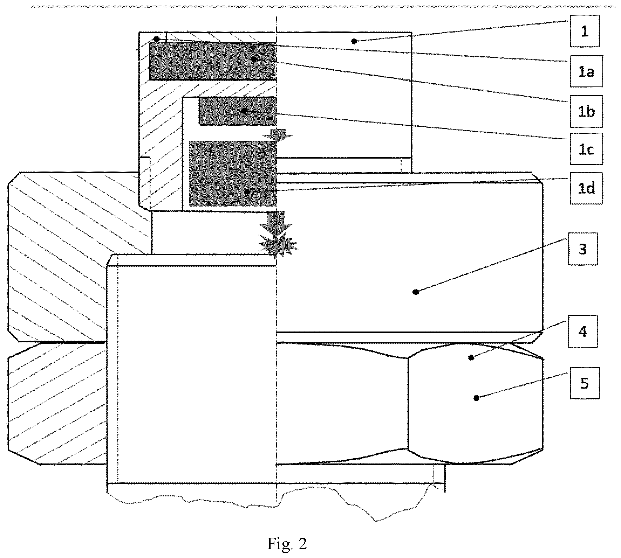

Fig. 2. Intelligent system for monitoring and assessing the technical condition of screw joints according to the invention, with an impact head - GUM, in a side section mounted on the bolt shank of a lap or butt joint,

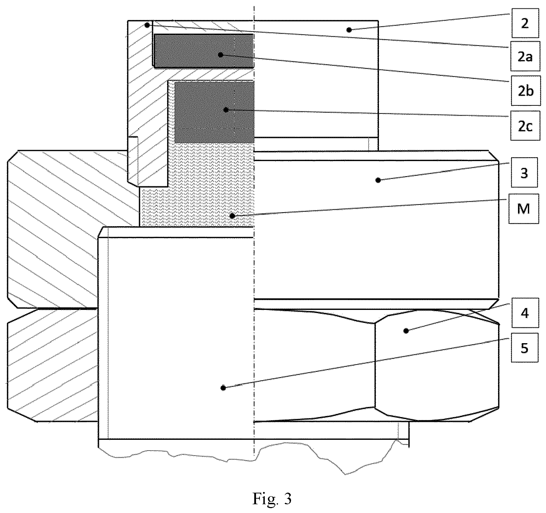

Fig. 3. An intelligent system for monitoring and assessing the technical condition of screw joints according to the invention, with an intelligent ultrasonic head - GUT, mounted on the screw shank of a lap or butt joint,

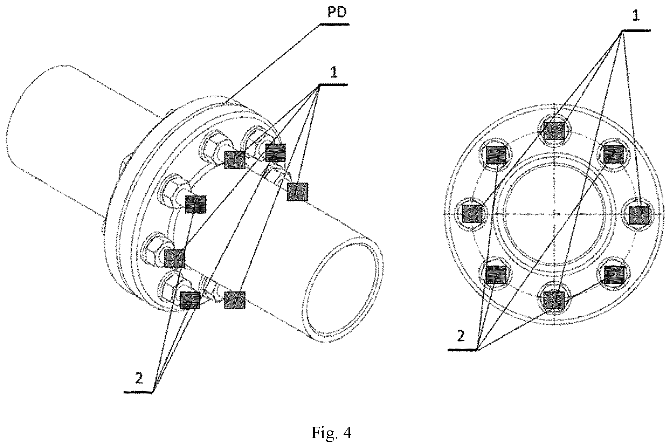

Fig. 4. Intelligent hybrid system for monitoring and assessing the technical condition of screw joints according to the invention, with an intelligent impact head - GUM and an intelligent ultrasonic head GUT, assembled alternately on the bolt pins of the lap or butt joints.

### Example I.

### Mechanical impact - GUM (1)

On the monitored lap screw joint (6), an intelligent monitoring and measuring head GUM - (1) is permanently and detachably mounted on the end of the screw shank (5), protruding above the joint nut, via an adapter (3). The intelligent impact head monitoring-measuring-GUM (1) is composed of a body (1a), a vibration sensor, and an intelligent electronic system (1b), which allows the accumulation of energy necessary for the activator (1c) to cause impulse activation of the impactor (1d). The impactor (1d) is placed above the front surface of the pin screws (5). Intelligent GUM heads (1) are mounted on each monitored screw (5) of the PZ lap joint (6) or PD butt joint of the structure - one head on the shank of one screw. Each head (1), with an adapter (3) and locknut (4), is mounted in a way that ensures watertightness.

The vibration sensor used in the sensor and the intelligent electronic system (1b) is a mechanical vibration sensor, a miniature MEMS accelerometer.

The intelligent electronic system (1b and 2b) comprises a microprocessor system that enables the processing of the signal measured by a sensor or probe and its analysis to calculate the characteristics of this signal. These characteristics carry information about the technical condition of the screw joint on which the GUM intelligent monitoring head is mounted (1) and enable the transmission of information about the technical condition of the screw joint to the superior system - UN.

The activator (1c) of the intelligent GUM monitoring head (1) employs an electromechanical trigger system with a return mechanism.

The impactor (1d) of the intelligent GUM monitoring head (1) is a cylindrical element made of high-hardness steel with high deformation and impact resistance. The intelligent electronic system (1b) of the GUM intelligent monitoring heads (1) connects bidirectionally via optical fiber or wirelessly with an external server (S). It receives commands initiating a periodic inspection of the screw joint and sends data, including measurement results, and, preferably, information about the technical status and specifications of the monitored screw connection (6) to the master system (UN).

Intelligent monitoring heads GUM (1) are powered by an electronic system equipped with an integrated circuit with very low power consumption and an energy buffer - a supercapacitor. This ensures the functionality of recovery and processing of waste energy obtained from the environment from various sources: electromagnetic radiation, vibration (piezoelectric), photovoltaic (solar), and thermal (thermoelectric generators, thermopiles and thermocouples), ensuring high energy conversion efficiency.

Intelligent monitoring heads GUM (1) are used to monitor and assess the condition of screw (6) lap joints - PZ of metal structures, especially those made of high-strength (U)HSS steel, including in particular conditions such as
- brittle cracks, fatigue cracks, cold cracks (hydrogen cracks), and cracks caused by general and/or stress corrosion,
- stresses-deformations of the screw shank (stress relaxation), longitudinal deformations of the screw shank in the monitored screw connection. Simultaneously, it indirectly assesses the pressure in the pipeline or piping of refinery installations, conventional energy, or nuclear energy, as well as the nature of the medium flow, laminar or turbulent,
- The level of effort and quality of the screw j oint, its degree of wear, and expected durability.

As a sensor within the sensor and the intelligent electronic system (1b), an additional fiber optic sensor is used in/on the inspection optical fibre, preferably in transmission pipelines and piping of refinery installations, conventional energy, or nuclear energy.

Each of the GUM intelligent monitoring heads (1) is additionally connected via an intelligent electronic system (1b) to an external master system (UN) via a server (S), which plans tests and interprets logs and warnings generated by individual intelligent monitoring heads GUM (1). The master system (UN) is a programmed microcircuit.

Each of the GUM intelligent monitoring heads (1) automatically (i.e., using the built-in intelligent electronic system (1b) evaluates the measured signal and further sends data - including an assessment of the technical condition of the screw joint - to the server (S). Each intelligent GUM monitoring head (1) is independently powered.

Intelligent GUM monitoring heads (1) are mounted on every second selected pin of the monitored screw (5) of the screw joint (6) PZ. In other embodiments, monitoring heads GUM (1) are mounted on all monitored screw connections (6) in the case of particularly responsible structures, such as wind towers, high-pressure transmission pipelines, and piping of refinery installations, conventional energy, or nuclear energy.

In another embodiment, the monitoring head GUM (1) is mounted on a front screw connection (6).

### Example II

### Sonic - ultrasonic - GUT (2)

On the monitored lap screw joint (6), an intelligent GUT (2) is permanently and detachably mounted on the end of the screw shank (5), protruding above the joint nut, via an adapter (3). The intelligent monitoring and measurement ultrasonic head (2) GUT (2) consists of a body (2a) and an intelligent electronic system (2b) that activates an ultrasonic probe (1c) placed above the front surface of the screw shank (5) and immersed in the coupling medium (O). Intelligent heads GUT (2) are mounted on each monitored screw (5) of the lap joint PZ (6) or butt joint of the structure PD, with one head of a given type on the shank of one screw.

Each head (2), with an adapter (3) and locknut (4), is mounted in a way that ensures watertightness. The intelligent electronic system (2b) can be a microprocessor system that processes the measured signal from a sensor or probe, analyzing it to calculate the characteristics of this signal. These characteristics carry information about the technical condition of the screw joint on which the intelligent monitoring head GUT (2) is mounted. The system also enables the transmission of information about the technical condition of the screw joint to the superior system - UN. The bidirectional connection of the intelligent electronic system (2b) of the intelligent monitoring heads GUT (2) occurs via optical fibre and wirelessly with an external server (S). This connection receives commands that initiate a periodic inspection of the screw joint and sends data, including measurement results and, preferably, information about the technical specifications of the monitored screw connection (6), to the master system (UN).

Intelligent monitoring heads GUT (2) are powered by an electronic system equipped with an integrated circuit with very low power consumption and an energy buffer - a miniature battery. This setup ensures the functionality of recovering and processing of waste energy obtained from the environment from various sources: electromagnetic radiation, vibration (piezoelectric), photovoltaic (solar), and thermal (thermoelectric generators, thermopiles, thermocouples), ensuring high energy conversion efficiency.

Intelligent monitoring heads GUT (2) are used to monitor and assess the condition of screw (6) lap joints - PZ of metal structures. They are particularly effective in assessing structures made of high-strength (U)HSS steel, including, in particular, conditions such as
- brittle cracks, fatigue cracks, cold cracks (hydrogen cracks), and cracks caused by general and/or stress corrosion,
- stresses-deformations of the screw shank (stress relaxation), longitudinal deformations of the screw shank in the monitored screw connection. Simultaneously, it indirectly assesses the pressure in the pipeline or piping of refinery installations, conventional energy, or nuclear energy, as well as the nature of the medium flow - laminar or turbulent,
- the level of effort and quality of the screw j oint, its degree of wear, and expected durability.

Each intelligent monitoring head GUT (2) is additionally connected via an intelligent electronic system (2b) to an external master system (UN) through a server (S). The server (S) is responsible for planning tests and interpreting the logs and warnings generated by the individual intelligent monitoring heads GUT (2), where the master system (UN) is a programmed microcircuit.

Each intelligent monitoring head GUT (2) automatically (i.e., using the built-in intelligent electronic system (2b)) evaluates the measured signal(s) and further sends data - including an assessment of the technical condition of the screw joint - to the server (S). Additionally, each of the intelligent monitoring heads GUT (2) is independently powered.

Intelligent monitoring heads GUT (2) are mounted on every second selected pin of the monitored screw (5) of the PZ screw joint (6). In other embodiments, in the case of particularly responsible structures, such as wind towers, high-pressure transmission pipelines, and piping in refinery installations, conventional energy, or nuclear energy, GUT heads (2) are mounted on all monitored screw connections (6).

In another embodiment, the monitoring head GUM (1) is mounted on a front screw connection (6). Example III.

Hybrid - GUM (1) and GUT (2) on selected screw connections (6). On the monitored lap screw joint (6), an intelligent GUM - (1) or GUT - (2) monitoring and measuring head is permanently mounted on the end of the screw shank (5), protruding above the joint nut, via an adapter (3). The intelligent monitoring and measurement impact head (1) or the intelligent monitoring and measurement ultrasonic head (2) is constructed as follows:
- Intelligent monitoring and measurement impact head GUM (1) is composed of a body (1a), a vibration sensor, and an intelligent electronic system (1b). This system enables the accumulation of energy necessary for the activator (1c) to cause the impulse activation of the impactor (1d). The impactor (1d) is positioned above the front surface of the pin screws (5);
- The intelligent monitoring and measurement ultrasonic head - GUT (2) is made-up of a body (2a) and an intelligent electronic system (2b) that activates an ultrasonic probe (1c). This probe is situated above the front surface of the screw shank (5) and immersed in the coupling medium (O).

The intelligent heads GUM (1) and GUT (2) are mounted on each monitored screw (5) of the PZ overlap joint (6) of the structure - with one head of a given type on the shank of one screw. Each head (1) or (2), with an adapter (3) and a locknut (4), is mounted in such a way as to ensure watertightness. The vibration sensor employed in the sensor and the intelligent electronic system (1b) is a mechanical vibration sensor, preferably a miniature MEMS accelerometer.

The intelligent electronic system (1b and 2b) consists of a microprocessor system. This system processes the measured signal from a sensor or probe, analysing it to calculate the characteristics of this signal. These characteristics carry information about the technical condition of the screw joint, where the intelligent monitoring head GUM (1) or GUT (2) is mounted. Additionally, the system enables the transmission of information about the technical condition of the screw j oint to the superior system, UN.

The activator (1c) of the intelligent monitoring head GUM (1) is an electromechanical trigger system with a return mechanism.

The impactor (1d) of the intelligent monitoring head GUM (1) is a cylindrical element made of high-hardness steel with high deformation and impact resistance.

The intelligent electronic system (1b) and (2b) of the intelligent monitoring heads GUM (1) and GUT (2) establishes bidirectional connections through optical fibre and wireless communication with an external server (S). This connection receives commands that initiate a periodic inspection of the screw joint and transmits data, including measurement results and preferably information about the technical condition of the screw connection (6), to the master system (UN).

Intelligent monitoring heads GUM (1) and GUT (2) are powered by an electronic system equipped with an integrated circuit with very low power consumption and an energy buffer - a miniature battery. This configuration ensures the recovery and processing of waste energy obtained from the environment from various sources: electromagnetic radiation, vibration (piezoelectric), photovoltaic (solar), and thermal (thermoelectric generators, thermopiles, thermocouples), ensuring high energy conversion efficiency. In alternative embodiments, the energy buffer may be a supercapacitor or a combination of a battery and a supercapacitor.

Intelligent monitoring heads GUM (1) and GUT (2) are used to monitor and assess the condition of screw joints (6) lap joints - PZ of metal structures, especially those made of high-strength (U)HSS steel, including in particular conditions such as
- brittle cracks, fatigue cracks, cold cracks (hydrogen cracks), and cracks caused by general and/or stress corrosion,
- stresses-deformations of the screw shank (stress relaxation), longitudinal deformations of the screw shank in the monitored screw connection. Simultaneously, it indirectly assesses the pressure in the pipeline or piping of refinery installations, conventional energy, or nuclear energy, as well as the nature of the medium flow - laminar or turbulent,
- the level of effort and quality of the screw j oint, its degree of wear, and expected durability.

As a sensor within the sensor and the intelligent electronic system (1b), an additional fibre optic sensor or a fiber optic sensor made in/on the inspection optical fiber is used, preferably in transmission pipelines and piping of refinery installations, conventional energy, or nuclear energy installations. Each of the intelligent monitoring heads GUM (1) and GUT (2) is additionally connected to an external master system (UN) via an intelligent electronic system (1b) and (2b) via a server (S), which plans tests and interprets logs and warnings generated by individual intelligent monitoring heads GUM (1) and GUT (2). The master system (UN) is a programmed microcircuit. Each of the intelligent monitoring heads GUM (1) and GUT (2) automatically(i.e., using the built-in intelligent electronic system (1b) and (2b)) evaluates the measured signal and further sends data - including an assessment of the technical condition of the screw joint - to the server (S). Each intelligent monitoring head GUM (1) and GUT (2) is independently powered. Intelligent monitoring heads GUM (1) and GUT (2) are mounted on every second selected pin of the monitored screw (5) of the screw connection (6) PZ. The intelligent monitoring and measuring GUM (1) and GUT (2) heads are mounted alternately on each monitored screw (5) of the screw joint (6) lap joint - PZ. Here, "alternately" means that they are mounted first on GUM (1) and then on GUT (2). In other embodiments, in the case of particularly sensitive structures such as wind towers, high-pressure transmission pipelines, and piping of refinery installations, conventional energy, or nuclear energy, GUM (1) and GUT (2) heads are mounted on all monitored screw connections (6). In another embodiment, the GUM (1) and GUT (2) monitoring heads are mounted on a butt screw connection (6).

### Descriptions

1. Intelligent monitoring and measurement impact head - GUM:
   1a - body
   1b - vibration sensor and intelligent electronic system
   1c - activator
   1d - impactor
2. Intelligent ultrasonic monitoring and measurement head - GUT:
   2a - body
   2b - intelligent electronic system
   2c - ultrasonic probe
3. Adapter
4. Locknut
5. Screw shank
6. Bolted joint
PD - Flange butt connection
S - server
U - seal under the screw
O - coupling medium
UN - master system

## Claims

1. An intelligent system for monitoring and assessing the technical condition of prestressed lap or butt screw joints is **characterized by** the permanent, detachable mounting of an intelligent monitoring-measuring head GUM (1) or GUT (2) on the monitored lap or butt screw joint (6). This is done on the end of the screw shank (5), which protrudes above the joint nut, via an adapter (3). The intelligent monitoring and measuring impact head (1) comprises a body (1a), a vibration sensor, and an intelligent electronic system (1b). This system enables the storage of energy necessary for the activator (1c) to cause impulse activation of the impactor (1d). The impactor (1d) is positioned above the front surface of the screw shank (5). The intelligent ultrasonic monitoring and measurement head GUT (2) comprises a body (2a) and an intelligent electronic system (2b) that activate an ultrasonic probe (1c) located above the front surface of the screw shank (5) and immersed in the coupling medium (O). Intelligent GUM (1) or GUT (2) heads are mounted on at least one, preferably on each, monitored screw (5) of the PZ lap joint (6) or PD butt joint of the structure, respectively. One head of a given type is mounted on the shank of one screw. Each head (1) or (2), with an adapter (3) and a locknut (4), is mounted in such a way as to ensure watertightness.

2. The intelligent system, according to claim 1, is **characterised by** the vibration sensor within the sensor and the intelligent electronic system (1b) being a mechanical vibration sensor, preferably a miniature MEMS accelerometer.

3. The intelligent system, according to claims 1 and 2, is **characterized by** the intelligent electronic system (1b or 2b) being a microprocessor system. This system enables the processing of the signal measured by a sensor or probe and its analysis to calculate the features of this signal that carry information about the technical condition of the screw joint on which the intelligent monitoring head GUM (1) or GUT (2) is mounted. The microprocessor system is remotely connected to the master system UN and sends information about the technical condition of the screw joint to the master system - UN.

4. The intelligent system, according to claims 1, 2, and 3, is **characterized by** the activator (1c) of the intelligent monitoring head GUM (1) being an electromechanical trigger system with a return mechanism.

5. The intelligent system, as claimed 1, 2, 3, and 4, is **characterized by** the impactor (1d) of the intelligent monitoring head GUM (1) being a cylindrical element. It is preferably constructed from steel with high hardness and resistance to deformation.

6. The intelligent system, according to claims 1 and 3, is **characterised by** the intelligent electronic system (1b) and (2b) of the intelligent monitoring heads GUM (1) and GUT (2) being connected bidirectionally via optical fibre and/or wirelessly with an external server (S). This connection allows for the reception of commands to initiate a periodic inspection of the screw joint and the transmission of data, including measurement results, and, preferably, information on the technical condition of the monitored screw joint (6) to the master system (UN).

7. The intelligent system, according to claims 1, 2, 3, 4, 5, and 6, is **characterized by** the intelligent monitoring heads GUM (1) and GUT (2) being powered by an electronic system. This system incorporates an integrated circuit with very low power consumption and an energy buffer, preferably in the form of a battery or supercapacitor.

8. The intelligent system, according to claims 1, 2, 3, 4, 5, 6, and 7, is **characterized by** the sensor and the intelligent electronic system (1b) being either a fiber optic sensor or a fiber optic sensor in/on the inspection optical fiber, preferably in transmission pipelines and piping in refinery installations, as well as in conventional energy and nuclear energy facilities.

9. The intelligent system, according to claims 1, 2, 3, 4, 5, 6, 7, and 8, is **characterized by** each of the intelligent monitoring heads GUM (1) and GUT (2) being additionally connected to an external master system (UN), preferably via a server (S). This connection is facilitated through an intelligent electronic system (1b) and (2b). The external master system (UN) performs tests, interprets logs, and responds to warnings generated by individual intelligent monitoring heads GUM (1) and GUT (2). The master system (UN) is preferably a programmed microcircuit.

10. The intelligent system, according to claims 1, 2, 3, 4, 5, 6, 7, 8, and 9, is **characterized by** each of the intelligent monitoring heads GUM (1) and GUT (2) automatically collecting the measured signal and analyzing and sending a message containing an assessment of the technical condition of the screw connection to the server (S). Each of the intelligent monitoring heads, GUM (1) and GUT (2), is independently powered.

11. The intelligent system, according to claims 1, 2, 3, 4, 5, 6, 7, 8, 9, and 10, is **characterized by** the intelligent monitoring heads GUM (1) and GUT (2) being strategically mounted on the shank of the monitored screw (5) within screw joints PZ and/or PD (6), preferably every second, or being mounted on all screw joints (6).

12. The intelligent system, according to claims 1, 2, 3, 45, 6, 7, 8, 9, and 10, is **characterized by** the intelligent monitoring and measuring head GUM (1) or GUT (2) being mounted alternately on each monitored screw (5) of the screw joint (6). This applies to both lap joints - PZ and butt joints - PD, with GUM (1) and then GUT (2) being placed alternately.
